# EUROPÄISCHE PATENTSCHRIFT

(11) **EP 2 793 196 B1**
(45) Veröffentlichungstag und Bekanntmachung des Hinweises auf die Patenterteilung: **07.06.2023**
(21) Anmeldenummer: 14164644.8
(22) Anmeldetag: 14.04.2014
(51) Int. Cl.: G06F 21/53, G07C 5/08, G07B 15/06

(54) **TACHOGRAPH UND ON-BOARD-EINHEIT FÜR EIN NUTZKRAFTFAHRZEUG**
TACHOGRAPH AND ON-BOARD UNIT FOR A UTILITY VEHICLE
TACHYGRAPHE ET UNITÉ EMBARQUÉE POUR UN VÉHICULE UTILITAIRE

(30) Priorität: 19.04.2013 DE 102013207110
(43) Veröffentlichungstag der Anmeldung: 22.10.2014
(73) Patentinhaber: Continental Automotive Technologies GmbH, 30165 Hannover (DE)
(72) Erfinder: Gerber, Rudolf, 78126 Königsfeld (DE); Lindinger, Andreas, 78658 Flözlingen (DE)
(74) Vertreter: Continental Corporation

(56) Entgegenhaltungen:
- DE-A1-102008 048 162
- GERNOT HEISER: "Virtualizing embedded systems - why bother?", DESIGN AUTOMATION CONFERENCE (DAC), 2011 48TH ACM/EDAC/IEEE, IEEE, 5. Juni 2011 (2011-06-05), Seiten 901-905, XP031927817, ISBN: 978-1-4503-0636-2
- GERNOT HEISER: "The role of virtualization in embedded systems", PROCEEDINGS OF THE 1ST WORKSHOP ON ISOLATION AND INTEGRATION IN EMBEDDED SYSTEMS, IIES '08, 1. April 2008 (2008-04-01), Seiten 11-16, XP055002239, New York, New York, USA DOI: 10.1145/1435458.1435461 ISBN: 978-1-60-558126-2
- Heradon Douglas: "Thin hypervisor-based security architectures for embedded platforms", , 12. März 2010 (2010-03-12), XP055220175, Stockholm, Sweden Gefunden im Internet: URL:http://soda.swedish-ict.se/3865/1/Thes is%2020100226.pdf [gefunden am 2015-10-12]
- Vmware ET AL: "Performance Study Understanding Memory Resource Management in VMware ESX 4.1", , 1 January 2010 (2010-01-01), XP055604727, Retrieved from the Internet: URL:https://www.vmware.com/content/dam/dig italmarketing/vmware/en/pdf/techpaper/vsp_ 41_perf_memory_resource-management-white-p aper.pdf [retrieved on 2019-07-11]

## Beschreibung

Die Erfindung betrifft einen Tachographen für ein Nutzkraftfahrzeug.

Tachographensysteme werden in Fahrzeugen verwendet, um bestimmte Informationen zu erfassen und zu speichern, beispielsweise in Lastkraftwagen oder in Bussen, um die gesetzliche Aufschreibpflicht für die sogenannten registrierrelevanten Informationen bei bestimmten Fahrzeuggattungen und Fahrzeugnutzungen zu erfüllen. Die Tachographensysteme dienen außerdem zur Kontrolle der Einhaltung der gesetzlich vorgeschriebenen Fahrtzeiten beziehungsweise Ruhepausen sowie zur Kontrolle der Geschwindigkeitsbegrenzungen. Moderne digitale Tachographen weisen meist weitere, teilweise kundenspezifische, Funktionen auf, die helfen, Kosten zu senken, Wegstrecken zu optimieren und Arbeitszeiten effektiver zu nutzen. Die Funktionen, die überwiegend als oder in Verbindung mit Software-Anwendungsprogrammen realisiert werden, haben somit häufig verschiedene Anforderungen bezüglich Lebenszyklus, Datensicherheit, Betriebssicherheit und Echtzeit-Anforderungen.

DE 10 2008 048 162 A1 offenbart eine On-Board-Unit (UOBU), die als ein Tachograph (DTCO) ausgebildet ist. Die On-Board-Unit weist mindestens eine Funktion von mindestens einer der folgenden Fahrzeugeinrichtungen auf: Mauterfassungseinrichtung, Ereignisdatenerfassungseinrichtung, Notrufeinrichtung, Transportüberwachungseinrichtung, Fahrzeugkursüberwachungseinrichtung, Flottenmanagementeinrichtung. Die On-Board-Unit UOBU umfasst ferner Applikationen APP, das heißt insbesondere Software-Module, die die jeweilige mindestens eine Funktion der mindestens einen Fahrzeugeinrichtung umfassen. Vorzugsweise sind in jeder Applikation APP die Funktionen einer der Fahrzeugeinrichtungen gekapselt. Die Applikationen werden auf der Hardware-Plattform HW ausgeführt und können die bereitgestellten Basis-Dienste, Daten und Messwerte nutzen.

GERNOT HEISER: "Virtualizing embedded systems - why bother?, DESIGN AUTOMATION CONFERENCE (DAC), 2011 48TH ACM/EDAC/IEEE, IEEE, 5. Juni 2011, Seiten 901-905, und GERNOT HEISER: "The Role of virtualization in embedded systems", PROCEEDINGS OF THE 1ST WORKSHOP ON ISOLATION AND INTEGRATION IN EMBEDDED SYSTEMS, IIES '08, 1. April 2008, Seiten 11 bis 16, als auch Heradon Douglas: "Thin hypervisor-based security architectures for embedded platforms", 12. März 2010, Seite 43, Zeile 4 bis Seite 46, Zeile15, offenbaren jeweils Virtualisierungskonzepte für "Embedded Systems" in der Automobilbranche.

Vmware ET AL: "Performance Study Understanding Memory Resource Management in VMware ESX 4.1", 1. Januar 2010 (2010-01-01), XP055604727 befasst sich mit Speichermanagementkonzepten für virtuelle Maschinen.

Die Aufgabe, die der Erfindung zu Grunde liegt, ist es, einen Tachographen für ein Nutzkraftfahrzeug zu schaffen, der eine flexible und zumindest teilweise rückwirkungsfreie Anpassung von Programmteilen ermöglicht.

Die Aufgabe wird gelöst durch die Merkmale des unabhängigen Patentanspruchs.

Die Erfindung zeichnet sich aus durch einen Tachographen. Der Tachograph ist ausgebildet, sicherheitskritische Programmteile und sicherheitsunkritische

Programmteile auszuführen. Der Tachograph umfasst eine Hardwareplattform mit einer Recheneinheit und einer Speichereinheit. Ferner umfasst der Tachograph eine Speicherverwaltung zur Verwaltung der Speichereinheit, die in der Recheneinheit lauffähig ist und ausgebildet ist, den jeweiligen Programmteilen einen geschützten virtuellen Speicherbereich zuzuweisen und zu verhindern, dass die jeweils anderen Programmteile auf diesen jeweiligen Speicherbereich lesend oder schreibend zugreifen. Des Weiteren umfasst der Tachograph einen Virtualisierer, der in der Recheneinheit lauffähig ist und der ausgebildet ist, unabhängige virtuelle Maschinen bereitzustellen, auf denen jeweils eines der Programmteile derart ausführbar ist, dass die jeweils anderen Programmteile nicht beeinflusst oder nur über vorgegebene Schnittstellen beeinflusst werden.

Vorteilhafterweise ermöglicht dies eine rückwirkungsfreie Separierung zwischen sicherheitskritischen Programmteilen und sicherheitsunkritischen Programmteilen in dem Tachographen des Nutzfahrzeugs. Es ermöglicht, die verschiedenen Programmteile abhängig von Datenschutzanforderungen und/oder Betriebssicherheitsanforderungen gegeneinander abzuschotten. Die Separierung ermöglicht Hardware-Kosten einzusparen, beispielsweise kann eine geringere Anzahl von Prozessoren eingesetzt werden zur Ausführung der unterschiedlichen Programmteile. Ferner können durch die Separierung Wartungskosten für sicherheitskritische Applikationen gesenkt werden.

Ein vorgegebener Betrieb des Tachographen ist durch eine Institution, insbesondere eine staatliche Institution, vorgegeben und/oder ist durch eine gesetzliche Vorschrift oder Verordnung vorgegeben. Der vorgegebene Betrieb des Tachographen umfasst insbesondere das sichere Speichern von Fahrdaten für eine spätere Auswertung, insbesondere einer Fahrgeschwindigkeit und einer Fahrzeit. Die Datensicherheit spielt somit eine wesentliche Rolle. Aus diesem Grund muss bei Tachographen, wenn Softwareänderungen durchgeführt werden, gegenüber der Institution nachgewiesen werden, dass der Tachograph die vorgegebenen Anforderungen weiterhin erfüllt. Dies erfolgt überwiegend durch eine Re-Evaluierung der Tachographen-Software. Durch Sicherstellung der Rückwirkungsfreiheit ist es möglich, Programmteile, die sicherheitsunkritisch sind, zu ändern ohne einen Nachweis erbringen zu müssen, dass sicherheitskritische Programmteile von diesen Änderungen unberührt bleiben.

Der Virtualisierer, der auf der Hardwareplattform abläuft, ermöglicht eine Ausführung von Programmteilen, die unterschiedliche Sicherheitsanforderungen aufweisen. Mittels des Virtualisierers in Verbindung mit der Speicherverwaltung kann sichergestellt werden, dass zumindest ein Teil der Programmteile rückwirkungsfrei, das heißt ohne dass andere Programmteile beeinflusst werden, ausgeführt werden können.

Die Bereitstellung der virtuellen Maschinen ermöglicht, dass unterschiedliche Betriebssysteme für unterschiedliche Anwendungen von dem Tachographen genutzt werden können.

Die Speicherverwaltung ist ausgebildet, Speicherschutzfunktion auszuführen. Die Speicherverwaltung ist beispielsweise ausgebildet, Speicherbereiche für die Ausführung von Code oder zum weiteren Beschreiben zu sperren. Hierbei können Anwendungs-Programmteile nicht auf Speicher anderer Anwendungs-Programmteile zugreifen. Ferner wird das Betriebssystem gegenüber den Anwendungs-Programmteilen abgeschottet. Das Betriebssystem umfasst einen eigenen Adressraum und ist so vor den Anwendungs-Programmteilen geschützt und getrennt.

Die Recheneinheit kann einen Mikrocontroller und/oder einen Mikroprozessor aufweisen zur Ausführung der Programmteile.

Anstatt des Begriffs "virtuelle Maschine" kann auch der Begriff "virtuelle Partition" genutzt werden. Die Virtualisierung erfolgt auf Systemebene. Die Partitionierung bezeichnet eine logische (softwareseitige) oder physische (hardwareseitige) Abtrennung eines Rechnersystems, in der eine oder mehrere autonome Betriebssysteminstanzen mit ihren Anwendungen betrieben werden kann.

Bei virtuellen Partitionen spiegelt beispielsweise ein Hypervisor den Betriebssystemen virtuelle Recheneinheiten und Adapterkarten vor und leitet Ressourcenbedarfe zur Laufzeit auf die physischen Komponenten weiter. Somit teilen sich mehrere oder alle Partitionen dieselbe physische Recheneinheit und Adapter. Ein Hypervisor, auch Virtual Machine Monitor genannt, ist eine Virtualisierungssoftware, die eine Umgebung für virtuelle Maschinen schafft.

Die Recheneinheit umfasst eine physische Speicherverwaltungseinheit für die Speicherverwaltung. Die physische Speicherverwaltungseinheit wird auch als Memory Management Unit bezeichnet. Die physische Speicherverwaltungseinheit kann als externe Zusatzkomponente für den Mikrocontroller und/oder Mikroprozessor ausgebildet sein oder in dem Mikrocontroller oder Mikroprozessor integriert sein.

Der Virtualisierer umfasst ein echtzeitfähiges Betriebssystem mit Echtzeit-Funktionen. Vorteilhafterweise ermöglicht dies eine unbedingte Einhaltung von vorgegebenen Zeitbedingungen und eine Vorhersagbarkeit des Prozessverhaltens, wie es insbesondere von eingebetteten Systemen, im Englischen embedded systems genannt, erforderlich ist. Es können somit von dem Tachographen Programmteile ausgeführt werden mit unterschiedlichen Sicherheits- und Echtzeitanforderungen.

Ausführungsbeispiele der Erfindung sind im Folgenden anhand der schematischen Zeichnung erläutert. Es zeigt:

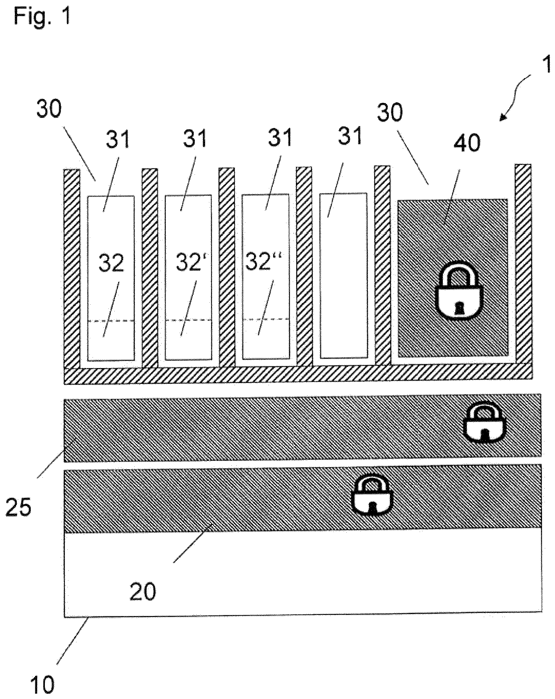

- Figur 1: ein Modell für eine Software- und Hardwarearchitektur für einen Tachographen.

Figur 1 zeigt ein Modell für eine Software- und Hardwarearchitektur für einen Tachographen 1, bei der einzelne Anwendungsprogramme 31 jeweils in sogenannten virtuellen Maschinen 30 ablaufen. Der Tachograph 1 ist ausgebildet, sicherheitskritische Programmteile und sicherheitsunkritische Programmteile auszuführen. Die Software- und Hardwarearchitektur kann für eine On-Board-Einheit (OBU) zur Mauterhebung und/oder zur Bereitstellung von Telematikdiensten analog ausgebildet sein.

Sowohl der Tachographen als auch die On-Board-Einheiten sind eingerichtet zur Speicherung von Fahrzeug- und Betriebsdaten des Fahrzeugs und werden auch als Boardinformationssysteme bezeichnet. Zu den Fahrzeug- und Betriebsdaten des Fahrzeugs gehören beispielsweise Lenk-, Arbeits-, Bereitschafts- und Ruhezeiten von Fahrer und Beifahrer, gefahrene Wegstrecken sowie einsatzspezifische Parameter, wie z. B. Drehzahlen und andere Arbeitsvorgänge und Ereignisse am Fahrzeug.

Der Tachograph 1 weist eine Hardware-Plattform mit zumindest einer Recheneinheit und einer Speichereinheit auf. Ferner umfasst der Tachograph 1 eine Speicherverwaltung zur Verwaltung der Speichereinheit. Die Speicherverwaltung ist ausgebildet, den jeweiligen Programmteilen einen geschützten virtuellen Speicherbereich zuzuweisen und zu verhindern, dass die jeweils anderen Programmteile auf diesen jeweiligen Speicherbereich lesend oder schreibend zugreifen.

Vorzugsweise umfasst die Recheneinheit eine physische Speicherverwaltungseinheit 20 zur Speicherverwaltung. Dies ermöglicht, dass die Speicherschutzaufgaben mit hoher Geschwindigkeit und sehr zuverlässig ausgeführt werden können und somit auch Echtzeitbetriebsbedingungen erfüllt werden können.

Die Recheneinheit umfasst beispielsweise einen Mikrocontroller, der die physischen Speicherverwaltungseinheit 20 zur Verwaltung der Speichereinheit aufweist. Die Speicherverwaltungseinheit 20 ist insbesondere ausgebildet zur Umrechnung einer virtuellen Adresse in eine physische Adresse. Besonders bevorzugt ist die Speicherverwaltungseinheit 20 ausgebildet, Zugriffsrechte in Bezug zu den virtuellen Speicherbereichen zu vergeben. Diese Zugriffsrechte können beispielsweise umfassen: nur lesend, lesend und schreibend oder kein Zugriff. Fehlzugriffe werden von der Speicherverwaltungseinheit 20 erkannt und verhindert.

Der Tachograph 1 weist einen Virtualisierer 25 auf, der auf der Hardwareplattform 10 lauffähig ist und der ausgebildet ist, unabhängige virtuelle Maschinen 30 bereitzustellen, in denen jeweils eines der Programmteile derart ausführbar ist, dass die jeweils anderen Programmteile nicht beeinflusst oder nur über vorgegebene Schnittstellen beeinflusst werden. Der Virtualisierer 25 stellt sicher, dass alle vorhandenen Betriebsmittel, wie zum Beispiel Arbeitsspeicher, eindeutig auf die virtuellen Maschinen 30 aufgeteilt werden. Die virtuellen Maschinen 30 haben ausschließlich auf die ihnen zugewiesenen Ressourcen Zugriff. Über vorgegebene gesicherte Kommunikationskanäle können die virtuellen Maschinen 30 bei Bedarf und sofern gewünscht, untereinander Daten austauschen oder Ressourcen teilen. In den virtuellen Maschinen 30 können Anwendungsprogramme 31 und/oder Laufzeitumgebungen und/oder Gastbetriebssysteme ausgeführt werden. Beispielsweise kann in einer ersten virtuellen Maschine eine Programmierschnittstelle 32 (API, Application Programming Interface), zum Beispiel POSIX (Portable Operating System Interface) ausgeführt werden, in einer zweiten virtuellen Maschine ein Echtzeitbetriebssystem 32', zum Beispiel OSEK-OS (Echtzeitbetriebssysteme für eingebettete Systeme im Automobilbereich), und in einer dritten virtuellen Maschine ein weiteres Betriebssystem 32", zum Beispiel Linux. In einer vierten virtuellen Maschine ist beispielsweise ein sicherheitskritisches Anwendungsprogramm 40 ausführbar, das mit Administrator-Rechten ausgestattet ist.

Komponenten des Modells, die mit Administrator-Rechten ausgestattet sind, sind in Figur 1 mit einem Schloss-Symbol versehen. Die Komponenten mit Administrator-Rechten umfassen Hardware und/oder Programmteile, die sicherheitsunterstützende Funktionen wahrnehmen und somit die Separierung ermöglichen.

Der Virtualisierer 25 umfasst beispielsweise ein echtzeitfähiges Betriebssystem mit Echtzeit-Funktionen.

Anstatt des Begriffs "virtuelle Maschine" kann auch der Begriff "virtuelle Partition" genutzt werden. Die Virtualisierung erfolgt auf Systemebene.

Die Partitionierung bezeichnet eine logische (softwareseitige) oder physische (hardwareseitige) Abtrennung eines Rechnersystems, in der eine oder mehrere autonome Betriebssysteminstanzen mit ihren Anwendungen betrieben werden kann. Bei virtuellen Partitionen spiegelt beispielsweise ein Hypervisor den Betriebssystemen virtuelle Recheneinheiten und Adapterkarten vor und leitet Ressourcenbedarfe zur Laufzeit auf die physischen Komponenten weiter. Somit teilen sich mehrere oder alle Partitionen dieselbe physische Recheneinheit und Adapter. Der Hypervisor, auch Virtual Machine Monitor genannt, ist ein Beispiel für eine Virtualisierungssoftware, die eine Umgebung für virtuelle Maschinen 30 schafft.

Mit dem Begriff "Sandbox" wird eine Technik bezeichnet, Programme innerhalb einer speziellen, von den übrigen Systemressourcen isolierten Laufzeitumgebung auszuführen. Bei Sandboxen erfolgt die Virtualisierung auf Betriebssystemebene. Bei der Virtualisierung auf Betriebssystemebene wird anderen Computerprogrammen eine komplette Laufzeitumgebung virtuell innerhalb eines geschlossenen Containers zur Verfügung gestellt, es wird kein zusätzliches Betriebssystem gestartet, was zur Folge hat, dass es nicht möglich ist, ein anderes Betriebssystem als ein Hostbetriebssystem zu betreiben. Die Betriebssystem-Container stellen eine Teilmenge eines Wirtbetriebssystems dar.

## Patentansprüche

1. Tachograph (1), der ausgebildet ist, sicherheitskritische Programmteile und sicherheitsunkritische Programmteile auszuführen und der aufweist:
- eine Hardwareplattform (10) mit einer Recheneinheit und einer Speichereinheit,
- eine Speicherverwaltung zur Verwaltung der Speichereinheit, die in der Recheneinheit lauffähig ist und ausgebildet ist, den jeweiligen Programmteilen einen geschützten virtuellen Speicherbereich zuzuweisen und zu verhindern, dass die jeweils anderen Programmteile auf diesen jeweiligen Speicherbereich lesend oder schreibend zugreifen,
- einen Virtualisierer (25), der in der Recheneinheit (10) lauffähig ist und der ausgebildet ist, unabhängige virtuelle Maschinen (30) bereitzustellen, auf denen jeweils eines der Programmteile derart ausgeführt wird, dass die jeweils anderen Programmteile nicht beeinflusst oder nur über vorgegebene Schnittstellen beeinflusst werden,
- wobei die Recheneinheit eine physische Speicherverwaltungseinheit (20) für die Speicherverwaltung umfasst,
- wobei der Virtualisierer (25) ein echtzeitfähiges Betriebssystem mit Echtzeit-Funktionen umfasst, und
- wobei von dem Tachographen (1) Programmteile mit unterschiedlichen Sicherheits- und Echtzeitanforderungen ausgeführt werden, und
- wobei in einer ersten virtuellen Maschine eine Programmierschnittstelle (32), in einer zweiten virtuellen Maschine ein Echtzeitbetriebssystem (32'), in einer dritten virtuellen Maschine ein weiteres Betriebssystem (32") ausgeführt werden und in einer vierten virtuellen Maschine ein sicherheitskritisches Anwendungsprogramm (40), das mit Administrator-Rechten ausgestattet ist, ausgeführt wird.

## Claims

1. Tachograph (1) which is designed to execute security-critical program parts and non-security-critical program parts and has:
- a hardware platform (10) having a computing unit and a memory unit,
- a memory management system for managing the memory unit, which memory management system is executable in the computing unit and is designed to assign a protected virtual memory area to each of the program parts and to prevent the respective other program parts from effecting read or write access to this respective memory area,
- a virtualizer (25) which is executable in the computing unit (10) and is designed to provide independent virtual machines (30) on each of which one of the program parts is executed in such a way that the respective other program parts are not affected or are affected only via predefined interfaces,
- wherein the computing unit comprises a physical memory management unit (20) for the memory management system,
- wherein the virtualizer (25) comprises a real-time-capable operating system having real-time functions, and
- wherein the tachograph (1) executes program parts with different security and real-time requirements, and
- wherein a programming interface (32) is executed in a first virtual machine, a real-time operating system (32') is executed in a second virtual machine, a further operating system (32") is executed in a third virtual machine and a security-critical application program (40), which is equipped with administrator rights, is executed in a fourth virtual machine.

## Revendications

1. Tachygraphe (1) qui est conçu pour exécuter des parties de programme critiques en termes de sécurité et des parties de programme non critiques en termes de sécurité et qui comporte :
- une plate-forme matérielle (10) comprenant une unité de calcul et une unité de mémorisation,
- un système de gestion de mémoire destiné à gérer l'unité de mémorisation, lequel est apte à fonctionner dans l'unité de calcul et est conçu pour affecter une zone de mémoire virtuelle protégée aux parties de programme respectives et empêcher les autres parties de programme d'accéder en lecture ou en écriture à cette zone de mémoire respective,
- un module de virtualisation (25) qui est apte à fonctionner dans l'unité de calcul (10) et qui est conçu pour fournir des machines virtuelles indépendantes (30) sur lesquelles l'une des parties de programme est exécutée de manière à ce que les autres parties de programme ne sont pas influencées ou ne sont influencées que par des interfaces spécifiées,
- l'unité de calcul comprenant une unité de gestion de mémoire physique (20) destinée à la gestion de mémoire,
- le module de virtualisation (25) comprenant un système d'exploitation capable de fonctionner en temps réel qui comprend des fonctions en temps réel, et
- des parties de programme ayant des exigences de sécurité et de temps réel différentes étant exécutées par le tachygraphe (1), et
- une interface de programmation (32) étant mise en oeuvre dans une première machine virtuelle, un système d'exploitation en temps réel (32') étant mis en oeuvre dans une deuxième machine virtuelle, un système d'exploitation supplémentaire (32") étant mis en oeuvre dans une troisième machine virtuelle et un programme d'application critique en termes de sécurité (40), qui a des droits d'administrateur, étant mis en oeuvre dans une quatrième machine virtuelle.
